# NEW EUROPEAN PATENT SPECIFICATION

(11) **EP 1 025 054 B2**
(45) Date of publication and mention of the opposition decision: **14.12.2005**
(45) Mention of the grant of the patent: 17.07.2002
(21) Application number: 98947688.2
(22) Date of filing: 16.10.1998
(51) Int. Cl.: C03B 19/14, C03B 23/00, C03C 17/00, C03C 17/02

(54) **PRODUCTION OF QUARTZ GLASS ARTICLES HAVING HIGH SURFACE PURITY**
HERSTELLUNG VON QUARZGLASGEGENSTÄNDEN MIT GROSSER OBERFLÄCHENREINHEIT
PRODUCTION D'ARTICLES EN VERRE DE QUARTZ AYANT UNE PURETE DE SURFACE ELEVEE

(30) Priority: 17.10.1997 GB 9722020
(43) Date of publication of application: 09.08.2000
(73) Proprietor: Saint-Gobain Quartz plc, Tyne and Wear NE28 6DG (GB)
(72) Inventor: SAYCE, Ian, George, Stocksfield Northumberland NE43 7NX (GB); WELLS, Peter, John, Gateshead Tyne & Wear NE9 7BL (GB)
(74) Representative: Manaton, Ross Timothy
(86) International application number: PCT/GB1998/003110
(87) International publication number: WO 1999/020574

(56) References cited:
- EP-A- 0 525 984
- EP-A- 0 622 340
- EP-B- 0 463 045
- WO-A-97/30000
- DE-C- 3 831 148
- US-A- 4 363 647
- US-A- 4 956 208
- PATENT ABSTRACTS OF JAPAN vol. 095, no. 010, 30 November 1995 & JP 07 187684 A (NIKON CORP), 25 July 1995 -& US 5 702 495 A

## Description

The present invention relates to the production of quartz glass articles having high purity surfaces, for example of the degree of purity necessary for critical applications in the semiconductor industry.

Glass articles may be shaped by a variety of processes, many of which leave the glass surface finish inadequate for the final purpose or application. In such circumstances it is common practice to up-grade the surfacefinish by heating the glass surfaceto such a temperature that the surface fuses. Superficial fissures, scratches and microcracks are thus removed, and typically the surface becomes glazed, smooth and transparent. The product is thereby strengthened, and also rendered easier to clean and to maintain free from subsequent contamination.

Processes of this type (commonly referred to as "flame polishing") are conventional in the manufacture of fused quartz components for the semiconductor industry, in the preparation of fibre optic preforms, in the manufacture of fused quartz lamp housings, and in many other applications.

The use of flame polishing is of particular advantage in the surface finishing of opaque vitreous silica articles used for example to make thermal baffles, pedestals and flanges in quartz glass reactors for the processing of silicon wafers. These opaque vitreous silicas as are described, for example, in WO-A1-97/30 000) generally derive their opacity from the presence of microbubbles within the glass body, which scatter radiation and thus inhibit transmission of radiant energy. When the surface of such a glass body is machined or ground there is exposed a layer of glass pitted by a multiplicity of tiny craters, where the microbubbles have been exposed. In the interests of hygiene, or to provide an improved surface finish for sealing, it is necessary to submit the exposed surface to flame polishing before the article can be put to use. It may even be necessary to grind the glazed surface, and/or repolish to achieve the optimum finish.

Generally there is little loss of any volatile impurity during the flame polishing process, thus in general the surface of the flame-polished article is comprised of glass substantially similar in chemical composition to that of the bulk glass. However it is desirable, particularly for semiconductor applications, to ensure that the purity of any exposed glass surface is as high as may be achieved in a cost-effective manner. For many semiconductor applications, a glass of extreme purity is desirable, such as may be achieved in a synthetic silica glass. Such silicas, typically produced by vapour deposition, or by fusing synthetic powders, can be substantially purer than chose conventionally achieved by fusing natural quartz crystal, but are more expensive and thus not widely used. Opaque products of synthetic silica purity are not generally available.

There is therefore a need for a method of producing high purity quartz glass articles, particularly opaque quartz glass arricles, whereof the surface is of a purity substantially greater than that which can be achieved by fusing quartz crystal, and of a high quality pore-free surface finish, but which avoids the high cost involved in manufacture of the bulk glass from synthetic silica.

We have found that it is possible to achieve flame polishing simultaneously with the deposition of synthetic silica, by employing a flame polishing burner modified to accept a controlled flow of vapour of a suitable silica precursor.

The present invention therefore provides, in one aspect, a method of producing a shaped quartz glass article consisting of a shaped glass substrate having a high purity surface layer by flame polishing simultaneously with the deposition of synthetic silica, the method comprising the step of forming a layer of high purity synthetic vitreous silica on the surface of the glass substrate having physical and/or chemical properties different from said high purity layer, by combusting a silica precursor in a burner and depositing the resulting silica on the surface of the glass substrate at a sufficiently high temperature that a coherent layer of pore-free vitreous silica is formed, without the need for subsequent sintering.

In a more specific aspect, the invention provides a method of providing a microbubble-containing silica glass object with a smooth high purity surface layer by flame polishing simultaneously with the deposition of synthetic silica, the method comprising the steps of combusting a silica precursor in a burner, and depositing the resulting silica on the surface of the silica glass object at a sufficiently high temperature that a coherent layer of pore-free vitreous silica is formed, without the need for subsequent sintering.

In cases where a high degree of surface flatness is required in the final article, it is preferred that the deposited layer should be of significant thickness, so that further grinding and/or polishing operations may be undertaken without the risk of breaking through to the underlying substrate of lower purity.

A simultaneous polishing and deposition process could not readily be achieved in a standard quartz glass workshop using the conventional silicon tetrachloride precursor for synthetic silica, because this precursor is noxious and difficult to handle, and because the by-product gases (chlorine and hydrochloric acid) are toxic and promote corrosion of metallic equipment. Depositing glass from such volatile halogen-containing precursors is thus hazardous, unless costly precautions are taken in the design of the feed equipment, and more particularly in the plant required to collect and dispose of the reaction products.

However we have found that when using a chlorine-free precursor these problems are substantially avoided. Preferred precursors are the siloxanes. In principle, any of a wide variety of siloxanes may be used, with the polymethylsiloxanes being particularly preferred. Polymethylsiloxanes of choice include hexamethyldisiloxane (HMDS) and the cyclic polymethylsiloxanes octamethylcyclotetrasiloxane (OMCTS) and decamethylcyclopentasiloxane (DMCPS). Alternative chlorine-free precursors include the alkoxysilanes (e.g., methyltrimethoxysilane) and other silane compounds. It is preferable to use a volatile precursor, fed as vapour to the flame, but it is possible to feed the flame with the precursor in the form of atomised liquid droplets, provided that combustion of such droplets is complete before impact upon the substrate being flame polished, in order to avoid the formation of microbubbles in the deposited layer.

Suitable burners may be made by appropriate modification of existing flame glazing burners, or by modification of the operating conditions of certain existing burners. Burners may be made of metal (either gas or water-cooled), or from quartz glass. Quartz glass burners are preferred for many applications, because there is no risk of contamination by sputtered metal particles. It is possible to construct a burner suitable for use in the method of the invention by adapting a conventional oxy-hydrogen burner made from quartz glass by the incorporation of additional feed pipes for oxygen and precursor vapour. Such a burner may be used to flame polish the surface of a quartz glass article of transparent or opaque quartz glass, and simultaneously to deposit a layer of synthetic vitreous silica, derived from oxidation of the precursor. The deposit occurs typically at a surface temperature in the range 1,500-2,000°C, at which temperature a coherent layer of pore-free glass is obtained (i.e., there is no intermediate deposition of soot, and therefore no need for subsequent sintering, as is proposed for example in U.S. 4,363,647). The process is rapid and undertaken under conditions in which the bulk glass never achieves a temperature sufficiently high to permit deformation. Flame polishing with silica deposition can thus be achieved on complex shapes, without distortion of the underlying quartz glass component.

The invention is hereinafter described in more detail by way of example only, with reference to the accompanying drawings, in which:-
Figure 1 is a plan view of the nozzle end of a conventional quartz glass burner; and
Figure 2 is a plan view of the nozzle end of a modified burner according to the invention.

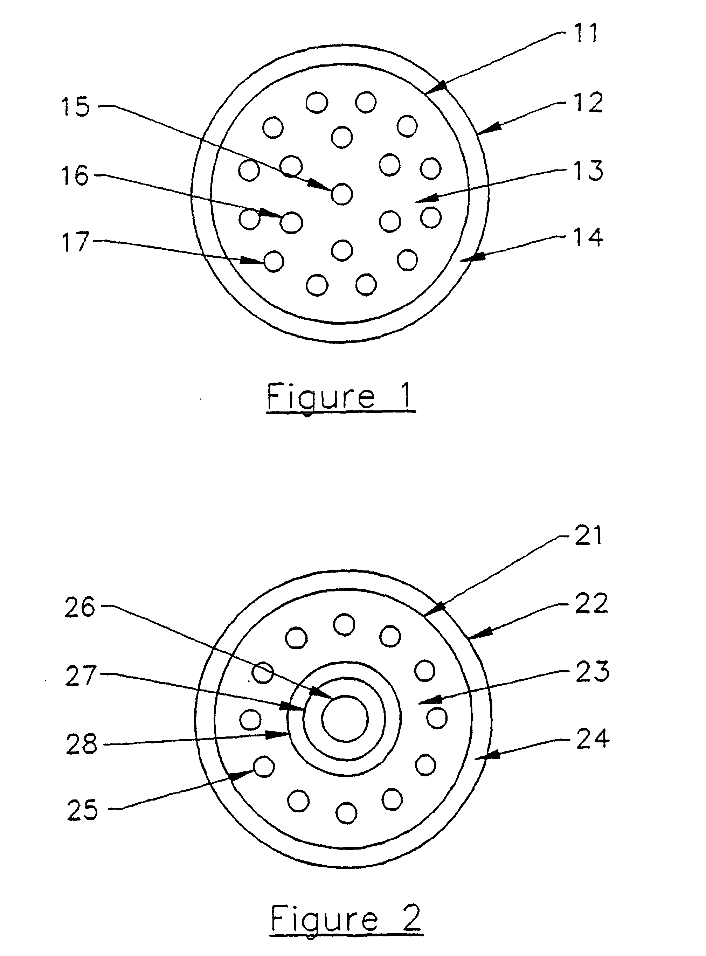

A simple design of fused quartz burner which may be used for flame polishing is shown in Figure 1. The main body of the burner comprises of two concentric tubes 11,12, which enclose an inner chamber 13, which may be supplied with a flow of hydrogen or other combustible gas, and an outer annular chamber 14, typically fed with oxygen. The central chamber also contains a series of parallel or convergent quartz glass jet tubes 15,16,17, typically arranged in concentric rings, which deliver oxygen. The size, number and geometry of these various components can be varied to suit the application.

A burner of the type shown in Figure 1 is conventionally used for flame polishing articles manufactured from transparent or opaque fused quartz. For the purpose of simultaneous polishing and synthetic silica deposition in a method according to the invention, it is possible to feed the inner chamber 13 with hydrogen, and the outer chamber with oxygen, in the conventional manner, but to feed the central jet tube 15 with siloxane vapour (or other silica precursor) in a suitable carrier gas flow (in place of oxygen), while feeding oxygen to the remaining jet tubes 16,17.

As carrier gas it is possible to use nitrogen, argon or other inert gas. Alternatively, it is possible to replace some or all of these gases with oxygen, and thus to vary the distance over which combustion of the siloxane takes place.

For some purposes it is preferable to use a redesigned burner of the type shown in Figure 2. The body of this burner again comprises two concentric tubes 21,22 which enclose inner chamber 23, supplied with hydrogen or other combustible gas, and an outer annular chamber 24, typically fed with oxygen. The central chamber again contains a series of parallel or convergent quartz glass jet tubes 25, arranged in one or more rings, but the central region of the burner comprises an array of two or more concentric tubes. Figure 2 depicts an arrangement of 3 such concentric tubes, 26,27,28, which may be fed with gases as follows. Central tube 26 may be fed with siloxane vapour in a suitable carrier gas, which may be nitrogen, argon or other inert gas, optionally mixed with oxygen. This is surrounded by tube 27, which may be fed with hydrogen or other combustible gas, while further tube 28 is fed with oxygen.

This arrangement permits the generation of a flame-polishing flame, in the centre of which is an intense siloxane flame, generating the silica fume which is deposited by the process of the invention.

These designs are understood not to be limiting, and alternative designs will be apparent to those skilled in the art.

The following examples relate to tests carried out using the method of the invention.

### Example 1.

A burner as illustrated in Figure 1 was operated with hydrogen fed to chamber 13, oxygen fed to jet tubes 16 and 17 and to outer coannular chamber 14, and 0.5m³/h of pre-heated nitrogen to jettube 15. This burner was used to heat the upper surface of a disk of transparent fused quartz, of diameter 150mm, thickness approximately 4mm, and starting weight 160.1g, to a surface temperature in the region of 1700°C, as measured by an optical pyrometer. The impurity content of the quartz disc is shown below in Table 1 below:

**Table 1**

| **Chemical Analysis (ppM by weight)** | |
|---|---|
| **Transparent** | **Fused quartz** |
| Al | 13.4 |
| Ca | 1.1 |
| Cu | 0.02 |
| Fe | 0.18 |
| K | 0.53 |
| Li | 0.65 |
| Mn | 0.01 |
| Na | 0.84 |
| Ti | 0.59 |
| Zr | 0.04 |

The gas flow to tube 15 was then adjusted to 0.5m³/h nitrogen, 0.1m³/h oxygen, and 0.1kg/h octamethylcyclotetrasiloxane (OMCTS) vapour supplied from a suitable vaporiser, and fed via a heated supply line.

The burner was scanned to and fro over the heated disk, for a period of 5 minutes, before the siloxane flow was terminated. Heating in the flame was continued for a few minutes more before the gas flows to the burner were reduced progressively and the disk was allowed to anneal in the flame.

After cooling, the disk was found to weigh 164.3g indicating an average thickness deposited of 107 µm, and a deposition efficiency of approximately 62%. The coating was highly glazed transparent and bubble-free.

### Example 2.

In this test, the substrate was an opaque fused quartz article, the impurity analysis of which is shown in Table 2 below:

**Table 2**

| **Chemical Analysis (ppM by weight)** | |
|---|---|
| **Opaque quartz** | **(TSL grade OSC2)** |
| Al | 9.3 3 |
| Ca | 1.0 |
| Cu | 0.01 |
| Fe | 0.35 |
| K | 0.41 |
| Li | 0.35 |
| Mn | 0.02 |
| Na | 0.63 |
| Ti | 1.5 |
| Zr | 0.42 |

The opacity of this material is attributable to the incorporation of many microbubbles, of typical size in the range 20-100 µm. Any machining, grinding, or mechanical polishing of this material leaves a surface pitted by broken microbubbles, and conventional flame polishing consequently leaves an undulating surface.

A burner as illustrated in Figure 2 was operated with hydrogen fed to chamber 23, and oxygen fed to jet tubes 25 and to outer coannular chamber 24. A low flow of nitrogen was fed to centre tube 26, while 1.5m²/h hydrogen was fed to coannular tube 21 and 3m³/h oxygen to tube 28.

A disk of opaque silica, TSL Grade OSC2, 150mm in diameter, thickness of approximately 4.5mm, and starting weight 159.8g, was heated to a temperature in the region of 1730°C.

The gas flow to central tube 26 was then adjusted to 0.5m³/h nitrogen, 0.15m³/h oxygen, and 0.14kg/h of OMCTS was supplied as vapour via a heated supply line.

The burner was scanned to and fro over the heated disk for a period of 6 minutes before the siloxane flow was terminated. Heating in the flame was continued for a few minutes before the gas flows to the burner were reduced progressively and the disk was allowed to anneal in the flame.

After cooling, the disk was found to weigh 166.6g, indicating an average thickness of synthetic glass deposited of some 174 µm, and a deposition efficiency of approximately 60%.

The surface finish appeared good, and substantially all the craters left by exposure of the microbubbles were filled. Furthermore, it was subsequently possible to grind the surface of the sample to a submicron finish. After a light acid etch and subsequent flame polish, the sample bore no remnant of the underlying porous microsiructure.

The chemical content of the deposited glass cannot be measured precisely in the thin layers in these examples. However, analysis of bulk glass deposited directly from a flame using OMCTS precursor under clean conditions shows that purities of less than 10ppB in all of the elements listed can be achieved.

While OMCTS has been used in the examples above, a range of other volatile siloxanes could alternatively be used, as could methyltrimethoxysilane or other alkoxysilanes. With appropriate modifications, it would also be possible to use silicon tetrachloride or other halosilanes, but these are less attractive precursors owing to the handling and effluent problems noted above.

## Claims

1. A method of producing a shaped quartz glass article consisting of a shaped glass substrate having a high purity surface layer by flame polishing simultaneously with the deposition of synthetic silica, the method comprising the step of forming a layer of high purity synthetic vitreous silica on the surface of the shaped glass substrate having physical and/or chemical properties different from said high purity layer, by combusting a silica precursor in a burner and depositing the resulting silica on the surface of the glass substrate at a sufficiently high temperature that a coherent layer of pore-free vitreous silica is formed, without the need for subsequent sintering.

2. A method according to claim 1, wherein the glass substrate is composed of silica containing a multiplicity of microbubbles.

3. A method according to claim 2, in which the deposited layer is of sufficient thickness to permit subsequent grinding to a smooth finish, without exposing any of the microbubbles.

4. A method of providing a microbubble-containing silica glass object with a smooth high purity surface layer by flame polishing simultaneously with the deposition of synthetic silica, the method comprising the steps of combusting a silica precursor in a burner, and depositing the resulting silica on the surface of the silica glass object at a sufficiently high temperature that a coherent layer of pore-free vitreous silica is formed, without the need for subsequent sintering.

5. A method according to claim 4, further comprising the step of grinding the deposited high purity vitreous silica layer to a smooth finish.

6. A method according to any preceding claim, wherein the silica precursor is chlorine-free.

7. A method according to claim 6, in which the silica precursor is a siloxane or an alkoxysilane.

## Patentansprüche

1. Verfahren zum Herstellen eines geformten Quarzglasgegenstands bestehend aus einem geformten Glassubstrat mit einer hochreinen Oberflächenschicht durch Flammenpolieren unter gleichzeitiger Abscheidung synthetischer Silica, wobei das Verfahren den Schritt des Ausbildens einer Schicht aus hochreinem synthetischem Quarzglas auf der Oberfläche des geformten Glassubstrats mit physikalischen und/oder chemischen Eigenschaften, die von der hochreinen Schicht verschieden sind, durch Verbrennen eines Silicavorläufers in einem Brenner und Abscheiden der resultierenden Silica auf der Oberfläche des Glassubstrats bei einer ausreichend hohen Temperatur, daß eine kohärente Schicht aus porenfreiem Quarzglas entsteht, ohne die Notwendigkeit für nachfolgendes Sintern, umfaßt.

2. Verfahren nach Anspruch 1, wobei das Glassubstrat aus Silica besteht, die eine Vielzahl von Mikroblasen enthält.

3. Verfahren nach Anspruch 2, bei dem die abgeschiedene Schicht eine ausreichende Dicke aufweist, um ein nachfolgendes Schleifen auf ein glattes Finish zu gestatten, ohne irgendwelche der Mikroblasen freizulegen.

4. Verfahren zur Bereitstellung eines Mikroblasen enthaltenden Silicaglasobjekts mit einer glatten hochreinen Oberflächenschicht durch Flammenpolieren unter gleichzeitiger Abscheidung synthetischer Silica, wobei das Verfahren die Schritte des Verbremens eines Silicavorläufers in einem Brenner und des Abscheidens der resultierenden Silica auf der Oberfläche des Silicaglasobjekts bei einer ausreichend hohen Temperatur, daß eine kohärente Schicht aus porenfreiem Quarzglas entsteht, ohne die Notwendigkeit für nachfolgendes Sintern, umfaßt.

5. Verfahren nach Anspruch 4, weiterhin mit dem Schritt des Schleifens der abgeschiedenen hochreinen Quarzglasschicht auf ein glattes Finish.

6. Verfahren nach einem der vorhergehenden Ansprüche, wobei der Silicavorläufer chlorfrei ist.

7. Verfahren nach Anspruch 6, wobei der Silicavorläufer Siloxan oder ein Alkoxysilan ist.

## Revendications

1. Procédé de fabrication d'un article en verre de quartz profilé constitué d'un substrat en verre profilé ayant une couche de surface de grande pureté par polissage à la flamme simultanément au dépôt de silice synthétique, le procédé comprenant l'étape de formation d'une couche de silice vitreuse synthétique de grande pureté sur la surface du substrat en verre profilé ayant des propriétés physiques et/ou chimiques différentes de celles de ladite couche de grande pureté, par combustion d'un précurseur de silice dans un brûleur et dépôt de la silice obtenue sur la surface du substrat en verre à une température suffisamment élevée pour former une couche cohérente de silice vitreuse exempte de pores, sans nécessiter de frittage ultérieur.

2. Procédé selon la revendication 1, dans lequel le substrat en verre est composé de silice renfermant une multitude de microbulles.

3. Procédé selon la revendication 2, dans lequel la couche déposée est d'épaisseur suffisante pour permettre un meulage ultérieur jusqu'à une finition lisse, sans révéler aucune des microbulles.

4. Procédé de fourniture d'un objet en verre de silice renfermant des microbulles ayant une couche de surface lisse de grande pureté par polissage à la flamme simultanément au dépôt de silice synthétique, le procédé comprenant les étapes de combustion d'un précurseur de silice dans un brûleur et de dépôt de la silice obtenue sur la surface du substrat en verre à une température suffisamment élevée pour former une couche cohérente de silice vitreuse exempte de pores, sans nécessiter de frittage ultérieur.

5. Procédé selon la revendication 4, comprenant en outre l'étape de meulage de la couche de silice vitreuse de grade pureté déposée jusqu'à une finition lisse.

6. Procédé selon l'une quelconque des revendications précédentes, dans lequel le précurseur de silice est exempt de chlore.

7. Procédé selon la revendication 6, dans lequel le précurseur de silice est un siloxane ou un alcoxysilane.
